# EUROPEAN PATENT APPLICATION

(11) **EP 2 811 728 A1**
(43) Date of publication of application: **10.12.2014**
(21) Application number: 14171363.6
(22) Date of filing: 05.06.2014
(51) Int. Cl.: H04M 9/08, G10L 21/0208, H04R 3/02

(54) **Use of vibration sensor in acoustic echo cancellation**

(30) Priority: 05.06.2013 US 201361831200 P
(71) Applicant: DSP Group Ltd., 4672505 Herzliya (IL)
(72) Inventor: Chen, Yaakov, 7570266 Rishon Le-tzion (IL); Blanka, Lior, 4856042 Rosh Haayin (IL)
(74) Representative: Modiano, Micaela Nadia

(57) **Abstract**

Methods and systems are provided for acoustic echo cancellation in electronic devices. The echo cancellation may comprise applying, as a first step, echo cancellation filtering to an acoustic input obtained via an acoustic input element (e.g., microphone), and applying, as a second step, echo suppression to the acoustic input, wherein the echo suppression comprises suppressing residual echo in the acoustic input. The echo cancellation filtering may comprise identifying and/or filtering out echo components, both linear and nonlinear, in the acoustic input, with the echo components corresponding to an echo signal caused by an acoustic output outputted via the acoustic output element (e.g., speaker). A sensor signal, generated by a vibration sensor that detects vibrations in the electronic device including vibrations caused by the outputting of the acoustic output, may be used as reference signal in the echo cancellation filtering and/or the echo suppression.

## Description

### CLAIM OF PRIORITY

This patent application makes reference to, claims priority to and claims benefit from the United States Provisional Patent Application No. 61/831,200, filed on June 5, 2013, which is hereby incorporated herein by reference in its entirety.

### TECHNICAL FIELD

Aspects of the present application relate to audio processing. More specifically, certain implementations of the present disclosure relate to methods and systems for using vibration sensors in acoustic echo cancellation.

### BACKGROUND

Existing methods and systems for providing audio processing, particularly for acoustic echo cancellation, may be inefficient and/or costly. Further limitations and disadvantages of conventional and traditional approaches will become apparent to one of skill in the art, through comparison of such approaches with some aspects of the present method and apparatus set forth in the remainder of this disclosure with reference to the drawings.

### BRIEF SUMMARY

A system and/or method is provided for use of a vibration sensor in acoustic echo cancellation, substantially as shown in and/or described in connection with at least one of the figures, as set forth more completely in the claims.

These and other advantages, aspects and novel features of the present disclosure, as well as details of illustrated implementation(s) thereof, will be more fully understood from the following description and drawings.

### BRIEF DESCRIPTION OF THE DRAWINGS

Fig. 1 illustrates an example electronic device that may support acoustic echo cancellation.
Fig. 2 illustrates an example system that may support acoustic echo cancellation based on vibration feedback.
Figs. 3A-3C illustrate charts of example frequency characteristics associated with different input and/or output signals, and handling thereof, during acoustic echo cancellation.
Figs. 4A-4D illustrate different example implementations of an echo cancellation filter that may be used to provide acoustic echo cancellation in an audio system.
Fig. 5 is a flowchart illustrating an example processing for providing acoustic echo cancellation based on vibration feedback.

### DETAILED DESCRIPTION

Certain example implementations may be found in method and system for non-intrusive noise cancellation in electronic devices, particularly in user-supported devices. As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first plurality of lines of code and may comprise a second "circuit" when executing a second plurality of lines of code. As utilized herein, "and/or" means any one or more of the items in the list joined by "and/or". As an example, "x and/or y" means any element of the three-element set {(x), (y), (x, y)}. As another example, "x, y, and/or z" means any element of the seven-element set {(x), (y), (z), (x, y), (x, z), (y, z), (x, y, z)}. As utilized herein, the terms "block" and "module" refer to functions than can be performed by one or more circuits. As utilized herein, the term "example" means serving as a non-limiting example, instance, or illustration. As utilized herein, the terms "for example" and "e.g.," introduce a list of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled, or not enabled, by some user-configurable setting.

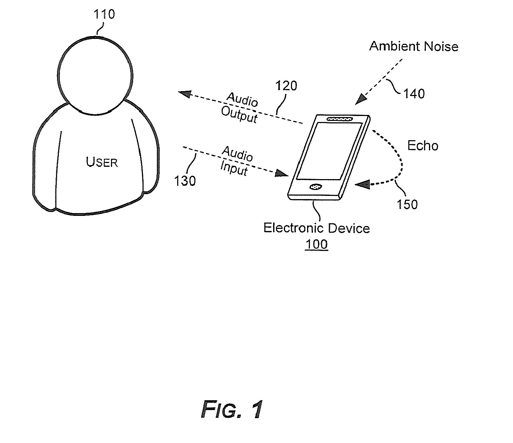

Fig. 1 illustrates an example electronic device that may support acoustic echo cancellation. Referring to Fig. 1, there is shown an electronic device 100.

The electronic device 100 may comprise suitable circuitry for implementing various aspects of the present disclosure. The electronic device 100 may be, for example, configurable to perform or support various functions, operations, applications, and/or services. The functions, operations, applications, and/or services performed or supported by the electronic device 100 may be run or controlled based on pre-configured instructions and/or user interactions with the device.

In some instances, electronic devices, such as the electronic device 100, may support communication of data, such as via wired and/or wireless connections, in accordance with one or more supported wireless and/or wired protocols or standards.

In some instances, electronic devices, such as the electronic device 100, may be a mobile and/or handheld device-i.e. intended to be held or otherwise supported by a user (e.g., user 110) during use of the device, thus allowing for use of the device on the move and/or at different locations. In this regard, an electronic device may be designed and/or configured to allow for ease of movement, such as to allow it to be readily moved while being held by the user as the user moves, and the electronic device may be configured to perform at least some of the operations, functions, applications and/or services supported by the device while the user is on the move.

In some instances, electronic devices may support input and/or output of acoustic signals (e.g., audio). For example, the electronic device 100 may incorporate one or more acoustic output components (e.g., speakers, such as loudspeakers, earpieces, bone conduction speakers, and the like), one or acoustic input components (e.g., microphones, bone conduction sensors, and the like), for use in outputting and/or inputting (capturing) audio and/or other acoustic content, as well as suitable circuitry for driving, controlling and/or utilizing the acoustic input/output components (and/or processing signals outputted or captured thereby, and/or data corresponding thereto).

Examples of electronic devices may comprise communication devices (e.g., corded or cordless phones, mobile phones including smartphones, VoIP phones, satellite phones, etc.), handheld personal devices (e.g., tablets or the like), computers (e.g., desktops, laptops, and servers), dedicated media devices (e.g., televisions, audio or media players, cameras, conferencing systems equipment, etc.), and the like. In some instances, electronic device may be wearable devices-i.e. may be worn by the device's user rather than being held in the user's hands. Examples of wearable electronic devices may comprise digital watches and watch-like devices (e.g., iWatch), glasses-like devices (e.g., Google Glass), or any suitable wearable listening and/or communication devices (e.g., Bluetooth earpieces). The disclosure, however, is not limited to any particular type of electronic device.

In operation, the electronic device 100 may be used to perform various operations, including acoustic (e.g., audio) related operations. For example, the electronic device 100 may be used in outputting acoustic signals (e.g., audio, which may comprise voice and/or other audio). In this regard, the electronic device 100 may be obtain data (e.g., from remote sources, using communication connections, and/or from local sources, such as internal or external media storage devices), may process the data to extract audio content therein, and may convert the audio content to signals suited for outputting (e.g., audio output 120, provided to the user 110), such as via suitable output components (e.g., a loudspeaker, an earpiece, a bone conduction speaker, and the like).

Similarly, the electronic device 100 may be used for inputting acoustic signals (e.g., audio, which may comprise voice and/or other audio). In this regard, the electronic device 100 may capture acoustic signals (e.g., audio input 130, which may be provided by the user 110), such as via suitable input components (e.g., a microphone, a bone conduction sensor, and the like). The captured signals may then be processed, to generate corresponding (audio) content, which may be consumed within the electronic device 100 and/or may be communicated (e.g., to another device, local or remote).

The quality of audio (or acoustic signals in general) outputted by and/or inputted into electronic devices may be affected by and/or may depend on various factors. For example, audio quality may depend on the resources being used (transducer circuitry, transmitter circuitry, receiver circuitry, network, etc.) and/or environmental conditions. The audio quality may be affected by, e.g., a noisy environment. In this regard, a noisy environment may be caused by various conditions, such as wind, ambient audio (e.g., other users talking in the vicinity, music, traffic, etc.), or the like. All these conditions combined may be described hereinafter as ambient noise (an example of which is shown in Fig. 1, as the reference 140, at the receive-side-i.e. with respect to the electronic device 100).

Another factor that may affect audio quality, particularly during input operations, is echo. In this regard, acoustic echo occurs in a communication system when an acoustic (e.g., audio) signal(s), usually speech, is outputted by a system (e.g., by a loudspeaker thereof), and the signal(s) produced by the loudspeaker are picked up (shown as echo 150) by one or more of microphones present in the electronic device. Hence, the audio content generated by the electronic device, based on signals captured via the microphone(s), would include unwanted component corresponding to the picked up echo 150. The echo 150 may be effectively a delayed, filtered and distorted version of the original signal(s) played (e.g., the audio output 120) by the loudspeaker of the near end device. When the audio content is transmitted by the electronic device (the 'near end' device) to another electronic device (the 'far end' device), the audio content played there would be perceived as having an echo. The presence of echo is undesirable, as it may make communication between the two devices, practically full duplex speech, very difficult if not impossible without use of particular measures directed at mitigating the echo-e.g., use of acoustic echo cancellation. Further, echo may limit audio and call quality in many devices, and more so in particular use scenarios, such as when the devices are used "hands-free," when higher audio amplification may be used and where the speakers may not held firmly against the users' ears.

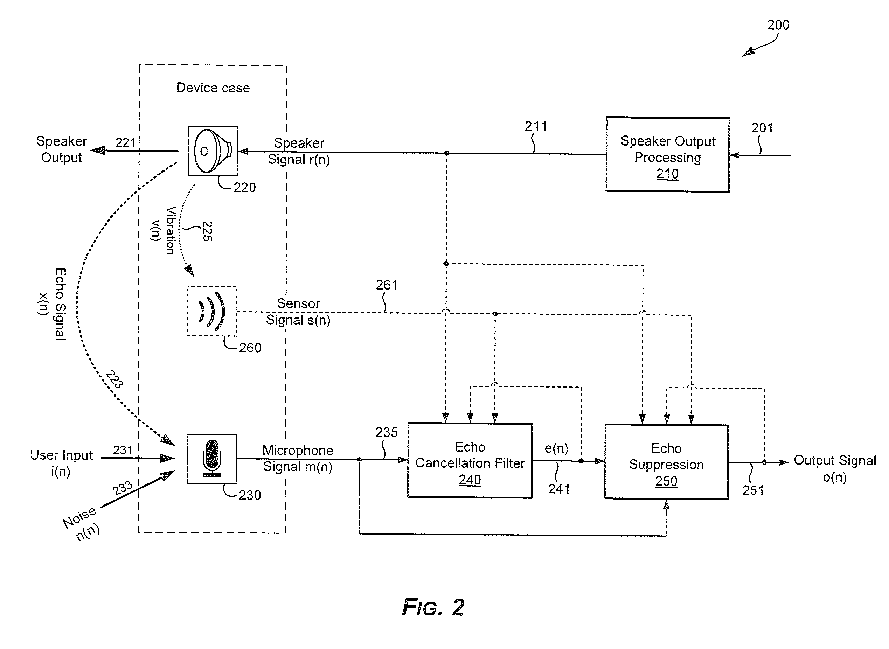

Accordingly, in various implementations of the present disclosure, audio operations in devices may be configured to incorporate adaptive echo cancellation, configured particularly to precisely identify and filter out portion(s) in captured acoustic signals that may be unwanted echo signals (or components thereof). For example, in audio communication setup shown in Fig. 1, the electronic device 100 may incorporate measures and/or components for performing acoustic echo cancellation. The echo cancellation may be done, for example, in two steps: echo cancellation filtering (identifying and filtering the echo components) and echo suppression. Further, in some implementations of the present disclosure, particular measures and/or components may provide detailed information about the echo signals, to enable adaptive configuring the echo cancellation filtering and the echo suppression-i.e., to better identify the unwanted echo components. An example implementation is described in more detail in Fig. 2.

Fig. 2 illustrates an example system that may support acoustic echo cancellation based on vibration feedback. Referring to Fig. 2, there is shown a system 200.

The system 200 may comprise suitable circuitry for use in outputting and/or inputting audio, and/or for providing adaptive enhancement associated therewith, particularly echo cancellation based on feedback. The feedback may be obtained based on sensory of vibrations (e.g., in an enclosure or a case of a device incorporating the system 200). For example, as shown in the example implementation depicted in Fig. 2, the system 200 may comprise a speaker output processing block 210, a speaker 220, a microphone 230, an echo cancellation filter 240, an echo suppression block 250, and a vibration sensor (VSensor) 260.

The speaker output processing block 210 may comprise suitable circuitry for generating acoustic signals (e.g., a speaker signal r(n) 211) which may be configured for outputting via a particular audio output device (e.g., the speaker 220). The speaker output processing block 210 may be configured, for example, to apply various signal processing functions to convert an original (digital) input into analog acoustic based signals that are particular suitable for output operations in the speaker 220.

The echo cancellation filter 240 may comprise suitable circuitry for performing echo cancellation filtering. The echo cancellation filtering may entail identifying and/or filtering out unwanted portions of the signals generated by an acoustic input device (e.g., the microphone 230). In particular, the unwanted portions may relate to or be caused by echo resulting from acoustic (e.g., audio) outputting by output components (e.g., the speaker 220) in the same device.

The echo suppression block 250 may comprise suitable circuitry for performing echo suppression. The echo suppression may entail removing residual filtered-out components (e.g., residual echo) in the input signal, which may remain after the filtering done in the echo cancellation filter 240. In this regard, the echo suppression block 250 may make fine suppression of the residual filtered-out (e.g., echo) components while keeping wanted components of the processed input signal intact.

In operation, the system 200 may be utilized to output and/or input acoustic (e.g., audio) signals, and to provide enhanced operations when doing so, particularly echo cancellation. For example, during acoustic output operations, the speaker output processing block 210 may generate, based on an input signal, the speaker signal r(n) 211, which may be applied to the speaker 220 to be played thereby, resulting in a corresponding audible speaker output 221 (by the speaker 220).

During acoustic input operations, the microphone 230 may be used to capture input(s), and may generate, in response, a microphone output signal m(n) 235. In particular, the microphone 230 may be used for purposes of capturing a particular intended (i.e., wanted) input, such as an audible user input i(n) 231 (e.g., corresponding to user speech). However, sometimes the microphone 230 may inadvertently capture other input(s) that may not be desired (i.e., unwanted). For example, in addition to the user input i(n) 231, the microphone 230 may also capture noise n(n) 233, which may comprise ambient noise and/or any noise due to particular components (e.g., analog components) of the device incorporating the system 200. Further, in instances where the speaker 220 is being used to output signals while the microphone 230 is being used to capture input signals, the microphone 230 may also receive an echo signal x(n) 223, which may represent an audible version of the speaker output signal 221. Hence, the microphone output m(n) 235 picked up and/or generated by the microphone 230 may be derived from and/or may be the superposition of three inputs: the (wanted) user input i(n) 231, the (unwanted) noise n(n) 233, and the (unwanted) echo signal x(n) 223 due to the speaker.

The echo signal x(n) 223 may include, in addition to the originally (intended) acoustic signal, additional components-e.g., multiple acoustic reflections and echo due to enclosure vibrations and reflections within the device as well as distortions due to the speaker and the digital to analog conversion of the received signal.

Accordingly, the processing performed in the audio input path may be configured to particularly clean up the captured microphone signal m(n) 235, to remove an unwanted portion in the signals (e.g., components relating to the noise n(n) 233 and/or the echo signal x(n) 223). In this regard, cleaning up the noise related portions may be achieved by use of noise cancellation (or reduction) circuitry (not shown). Cleaning up the echo related portions, however, may be done using echo cancellation.

In this regard, echo cancellation may be used to cancel and/or suppress the echo signal captured by the microphone, as much as possible with minimum impact on the (wanted) input signal. For example, echo cancellation may be done in two steps: echo cancellation filtering and echo suppression. During the first step, the echo cancellation filtering portions in the processed signal (e.g., the microphone output) corresponding to echo may be identified and filtered out. This may be done using one or more adaptive transversal filters, which may model the linear response(s) between one or more reference signals and the echo signal, and may generate residual error signal(s) as the output. In the second step, echo suppression may be applied, using some of many echo suppression techniques. The echo suppression may be used to suppress residual echo that may remain (e.g., in the error signal that is output after the echo cancellation filtering). For example, the echo suppression may be applied to the original microphone signal, using the output signal of the echo cancellation filter, together with one or more reference signals. The echo suppression may use all the available signals to estimate the residual echo, in order to produce the output signal. The echo suppression may be particularly critical when the two sides are contributing to the conversation at the same time. In the system 200, the echo cancellation may be done using the echo cancellation filter 240 and/or the echo suppression block 250.

For example, the speaker signal r(n) 211 may be used as the reference signal. Hence, to apply echo cancellation in the system 200, during acoustic input operations, the echo cancellation filter 240 may be used to apply echo cancellation filtering to the microphone signal m(n) 235 (combining i(n) 231, x(n) 223, and n(n) 233), using the speaker signal r(n) 211 (i.e., the original input to the speaker, prior to any operations thereby). The echo cancellation filter 240 may then model the linear response between the reference signal, the speaker signal r(n) 211, and the echo signal, x(n) 223, and generate in response the error signal e(n) 241, as the output. The error signal e(n) 241 may then be inputted to the echo suppression block 250, together with the signal r(n) 211, and the microphone output signal, m(n) 235, and the echo suppression block 250 may suppress residual echo signal (components) and may output the signal o(n) 251.

The quality of the echo cancellation may depend on, among other things, the generation of the error signal e(n) 241. In this regard, the generation of the error signal e(n) may be affected by both linear and non-linear effects. Linear effects may comprise: direct echo from the speaker to the microphone, linear echo due to the major enclosure vibration and reflections where the microphone and the speaker are attached to the same enclosure, plus acoustic reflections from the surroundings. Non-linear effects may comprise: nonlinearities of the codec digital-to-analog (D/A) and analog-to digital-(A/D) conversions, nonlinearities of the speaker and microphone responses, nonlinearities due to enclosure vibration effects, under-modeling of the acoustic transfer function with long multipath reflections, finite precision and truncation when using fixed point arithmetic, and noise.

Hence, echo cancellation filtering that uses (only) the signal r(n) 211 as the reference signal (i.e., as a representative of the echo) may be very limited since the signal r(n) 211 may not represent correctly all the frequency components of the echo signal x(n) 223. In particular, the signal r(n) 211 does not reflect the non-linear effects, and thus it does not include or help identify the nonlinear frequency components, which may constitute a significant portion of the echo signal x(n). Thus, because the signal r(n) 211 does not include the echo nonlinear components, these components cannot be modeled during linear adaptive filtering when that signal is used as a reference, and as a result, the performance of the echo cancellation filtering is limited. Further, while echo cancellation filtering performed in that manner (i.e., using the signal r(n) 211 as the sole reference) may not directly distort the user input (speech) i(n) 231, it may affect the quality of input speech implicitly since high echo suppression may be required due to potentially poor echo cancellation.

Therefore, when the signal r(n) 211 is used as the sole reference, the estimation of the echo may be poor, and in order to provide an acceptable level of suppression either the user input (speech) is also suppressed, or alternatively the user input (speech) is maintained but the nonlinear echo components remain present. While it may be possible to use the microphone signal m(n) 235 or error signal e(n) 241 to estimate nonlinear components of the echo as these signals may already include nonlinearities, these signals will also still include the input speech which reduces the usefulness of these signals directly unless it is known where the nonlinear echo components are found.

Accordingly, in various implementations, echo cancellation may be improved, such as by incorporating means for obtaining better information about the echo signal(s), particularly about the nonlinear components thereof. This may be done, for example, by using the vibration sensor 260. In this regard, the vibration sensor 260 may be attached to the same enclosure or housing of the device as is the speaker 220. Hence, the vibration sensor 260 may detect vibrations v(n) 225 in the enclosure or housing, and may generate a sensor signal s(n) 261 based on that detection. Where the vibrations v(n) 225 are caused by the audio output of the speaker 220, the sensor signal s(n) 261 may comprise the speaker signal (i.e., received signal) r(n) 211 itself, as all other components resulting from the outputting operations, including, e.g., the nonlinearities of the echo signal (e.g., due to the speaker, the enclosure vibrations, and/or the digital to analog conversion of the signal). The sensor signal s(n) 261 would include almost no components (or at most, negligible components) corresponding to the user input i(n) 231 and/or the ambient noise n(n) 233, and as such it would be particularly suited for use as a reference in echo cancellation.

In a particular example implementation, the microphone output m(n) 235 and the sensor signal s(n) 261 may be applied as inputs to the echo cancellation filter 240, which may then apply filtering for purpose of echo cancellation. For example, the echo cancellation filter 240 may estimates the linear and nonlinear echo signal(s), or components thereof, due to the direct echo and reflections which are present in both inputs-that is the sensor signal s(n) 261 and m(n) 235. The echo cancellation filter 240 may then identify and filter out unwanted portions in the signal (e.g., corresponding to the echo signal's linear and/or nonlinear components), leaving the portions which correspond to the wanted user input i(n) 231. The echo cancellation filter 240 may generate an output signal, error signal e(n) 241, which may then be applied to the echo suppression block 250. The error signal e(n) 241 may help identify the unwanted portions (e.g., the "echo errors") in the microphone output signal m(n) 235. Further, a feedback signal (i.e., the output signal of the echo cancellation filter 240, the error signal e(n) 241) may also be used as input to the echo cancellation filter 240, to further optimize the filtering performed thereby.

In addition to the error signal e(n) 241, the microphone output m(n) 235 and the sensor signal s(n) 261 may also be applied to the echo suppression block 250. With the information in the error signal e(n), and using the information in the reference signal(s) (e.g., the sensor signal s(n) 261), the echo suppression block 250 may effectively remove the residual echo error signals. The echo suppression block 250 may make fine suppression of the residual echo components and nonlinear echo components while keeping the user input i(n) 231 intact resulting in acceptable and successful echo suppression. The echo suppression block 250 may generate an output signal, output signal o(n) 251, corresponding to the outcome of the overall echo cancellation and suppression operations. Thus, the output signal o(n) 251 from the echo suppression block 250 may be presumed to be a good representation of the user input (e.g., speech) i(n) 231, with zero or minimal distortion. Further, a feedback signal (i.e., the output signal of the echo suppression block 250, the output signal o(n) 251) may also be used as input to the echo suppression block 250, to further optimize the filtering performed thereby.

In some instances, the speaker signal r(n) 211 may also be applied to the echo cancellation filter 240 and/or the echo suppression block 250 to further aid the echo cancellation and/or suppression process. Without the vibration sensor 260 the echo cancellation and/or suppression process must depend solely upon the speaker signal r(n) 211, which does not include any nonlinear echo signals, as the reference. The result is that the echo cancellation filter 240 may not successfully remove all the echo components and hence the echo suppression tends to be more complex with the result being that the output signal from the echo suppression block 250 will be a distorted version of the user's input speech i(n) 231.

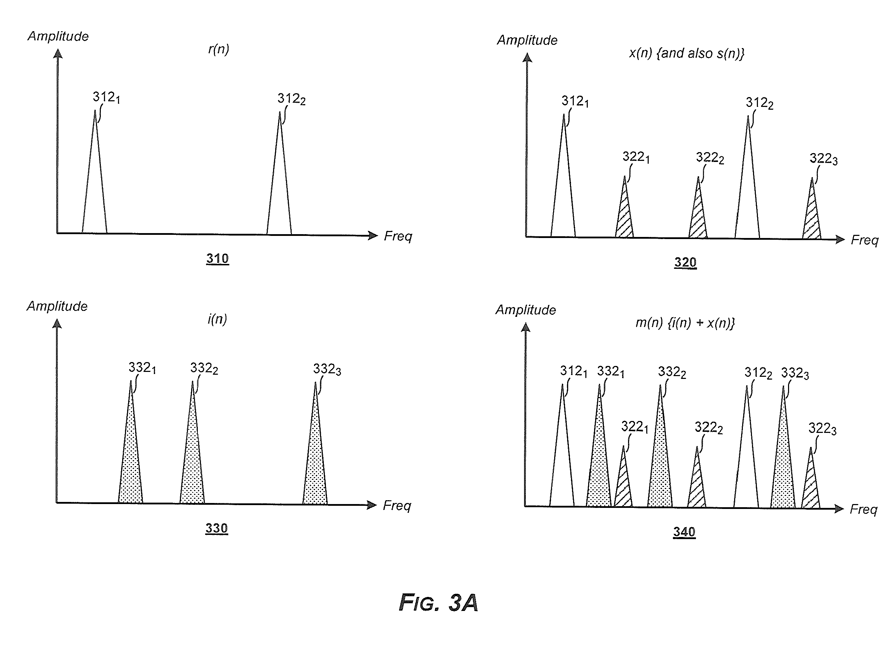

Figs. 3A-3C illustrate charts of example frequency characteristics associated with different input and/or output signals, and handling thereof, during acoustic echo cancellation.

Referring to Fig. 3A, there is shown frequency charts 310, 320, 330, and 340, which may correspond to various signals that may be present (e.g., used, generated, and/or captured), during audio operations in a system, such as the system 200 of Fig. 2, particularly when acoustic echo cancellation is done. For example, the frequency chart 310 depicts example frequency components (312₁ and 312₂) of a received input signal-that is the signal being fed into system loudspeaker-e.g., signal r(n) 211 in Fig. 2, being fed to the speaker 220.

The frequency chart 320 depicts example frequency components of an echo signal corresponding to the system loudspeaker (e.g., audio echo signal x(n) 223 in Fig. 2, which is captured by the microphone 230). For example, the frequency components of the echo signal may comprise frequency components of the received signal itself (i.e., the frequency components, 312₁ and 312₂, of the speaker signal r(n)) as well as other frequency components that may be present due to operations relating to handling of the receive signal (e.g., frequency components 322₁, 322₂ and 322₃). For example, the 'other' frequency components may be generated in the system due to the nonlinear effects in the system speaker and/or in other parts of the system (e.g., the system case/enclosure itself), as well as certain processing steps, such as digital-to-analog (A/D) conversions. The frequency components shown in frequency chart 320 may also represent the frequency components of the sensor signal (e.g., the sensor signal s(n) 261, as detected by the VSensor 260), which may correspond to vibrations (e.g., vibration signal v(n) 225) in the system, particular its case/enclosure, caused by the audio output of the system loudspeaker. In other words, the vibration sensor may detect the frequency components of the received input signal (i.e., frequency components 312₁ and 312₂) as well as other frequency components relating to the receive signals (e.g., the frequency components 322₁, 322₂ and 322₃ due to nonlinearities and/or A/D conversions).

The frequency chart 330 depicts example frequency components (e.g., 332₁, 332₂ and 332₃) of a user input (e.g., user speech) signal, such as the signal i(n) 231 in Fig. 2, as captured by the microphone 230. The frequency chart 340 depicts example frequency components of the microphone output signal (e.g., the microphone signal m(n) 235, at the output of the microphone 230 of the system 200 in Fig. 2). For example, the microphone output signal may comprise the frequency components in the captured echo signals (i.e., the frequency components received input signal, 312₁ and 312₂, as well as the other receive signals related frequencies: 322₁, 322₂ and 322₃), plus the frequency components of the user input signal (i.e., frequency components 332₁, 332₂ and 332₃).

The frequency components of the sensor signal (s(n)) as shown in the frequency chart 320) and of the microphone output signal (m(n)) as shown in the frequency chart 340 may represent the input(s) to the echo cancellation filtering operations (e.g., as performed in the echo cancellation filter 240). In this regard, the vibration sensor does not detect user input. Thus, the sensor signal s(n) does not include the frequency components of the user input speech (i.e., frequency components 332₁, 332₂ and 332₃), and as such may be suitable for use as reference signal in echo cancellation filtering. Accordingly, the echo cancellation filter (240) may use the sensor signal s(n) when attempting to filter out the echo signal frequency components (represented by the frequency components of the sensor signal s(n)) from the microphone output signal, m(n), while retaining the frequency components of the user input signal i(n).

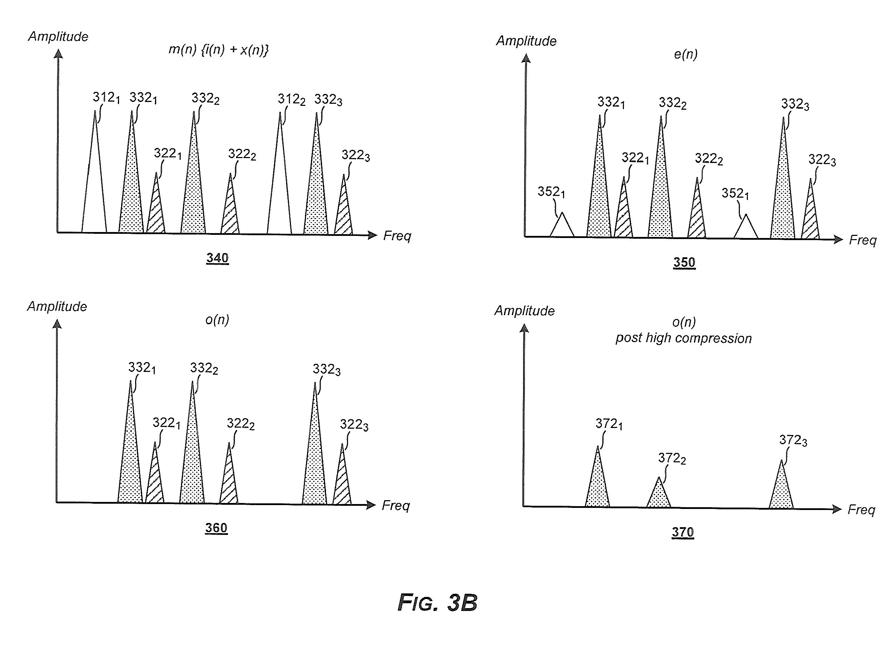

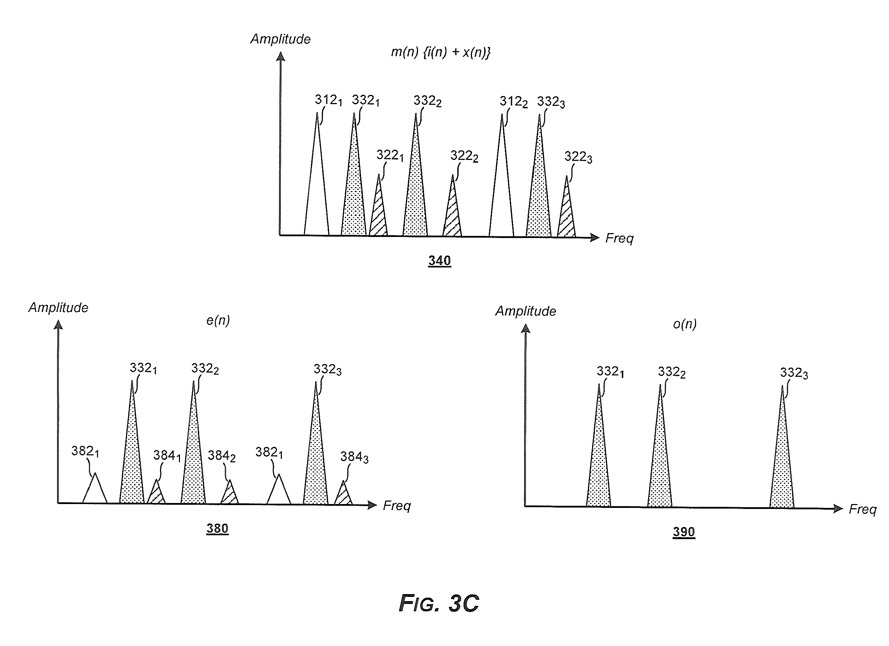

Thus, echo cancellation may be expressed in terms of manipulation of frequency components of the microphone output signal m(n). Examples of different possible echo cancellation, as expressed in terms of frequency components manipulation, with reference to the example frequency component profile of the microphone output signal m(n) shown in the frequency chart 340 as starting point, are depicted in Figs. 3B and 3C.

Referring to Fig. 3B, there is shown the frequency chart 340 as well as frequency charts 350, 360, and 370, which may depict frequency components profiles of processed signals in the audio input path (i.e., starting with the microphone output signal m(n), e.g., as depicted in the chart 340) in accordance with an echo cancellation process in which only the received input signal r(n) is used as a reference signal (e.g., in the echo cancellation filter 240)-i.e., without the sensor signal s(n) as input (reference signal). For example, in some instances, the vibration sensor is not present, and as such the sensor signal s(n) may be not available. Thus, the input to the echo cancellation filter 240 may be limited to the speaker signal r(n) (e.g., as depicted in the chart 310) and the microphone output signal m(n).

The frequency chart 350 depicts example frequency components of an output signal after echo cancellation filtering (e.g., the error signal e(n) 241, which is the output of the echo cancellation filter 240) in this case. In this regard, the echo cancellation filtering may be limited to using the reference signal r(n) to identify the unwanted copy of the receive signal (i.e., frequency components 312₁ and 312₂) in the microphone output signal m(n), and attempt to remove them. Accordingly, the echo cancellation filtering output signal may comprise "filtered" frequency components 352₁ and 352₂, which correspond to the frequency components of the received input signal r(n), but at a much lower amplitude. In other words, without having a reference signal that provides information on additional frequency components corresponding to the speaker audio output (beside the frequency components of the original speaker input signal), the echo cancellation filtering may be limited to attempting to filter out the original frequency components (312₁ and 312₂), but would not filter out other frequency components (e.g., 322₁, 322₂ and 322₃) that are caused by the speaker audio output, and which are also captured in (i.e., are part of) the microphone output m(n). Thus, remaining echo frequency components (322₁, 322₂ and 322₃) may then be assumed (erroneously) to be part of the user input i(n). Hence, the unwanted frequency components 322₁, 322₂ and 322₃ still appear in the echo cancellation filter output, as shown in chart 350.

The frequency chart 360 depicts example frequency components of an output signal after echo suppression (e.g., the output signal o(n) 251 of the echo suppression block 250), following the echo cancellation filtering in this case. In this regard, the echo suppression may further reduce the filtered components 352₁, 352₂, leaving the frequency components of the user input signal i(n) (i.e., the frequency components 332₁, 332₂ and 332₃) plus the unwanted, echo based frequency components 322₁, 322₂ and 322₃. Accordingly, the audio output corresponding to the microphone captured signals may contain nonlinear components, resulting in a degraded output signal.

In some instances, where echo cancellation may not be particularly configured to filter out nonlinear (echo) based effects, additional techniques may be used, for the purpose of addressing (e.g., identifying and/or mitigating) any possible nonlinear echo cancellation. For example, high levels of compression may be used to further suppress possible unwanted signals (e.g., frequency components 322₁, 322₂ and 322₃). The frequency chart 370 depicts example frequency components of the echo suppression output signal (e.g., the output signal o(n) 251) when high compression is utilized. In this regard, the unwanted frequency components (322₁, 322₂, and 322₃) may, as a result, be suppressed but at the expense of reducing and corrupting the wanted signals, as represented by compressed user input frequency components 372₁, 372₂ and 372₃.

Referring to Fig. 3C, there is shown the frequency chart 340 as well as frequency charts 380 and 390, which may depict frequency components profiles of processed signals in the audio input path (i.e., starting with the microphone output signal m(n), as depicted in the chart 340) in accordance with an echo cancellation process in which both the received input signal r(n) as well as the sensor signal s(n) are used as reference signals (e.g., in the echo cancellation filter 240).

The frequency chart 380 depicts example frequency components of an output signal after echo cancellation filtering (e.g., the error signal e(n) 241, which is the output of the echo cancellation filter 240) in this case.

In this regard, the echo cancellation filtering may use, in this case, both the receive signal (e.g., the speaker signal r(n), as depicted in the chart 310) and the sensor signal (e.g., the sensor signal s(n), as depicted in the chart 320) as reference signals, to help identify all unwanted signals, including both the copies of the original signal as well as signal(s) resulting from use thereof in the output path (i.e., frequency components 312₁, 312₂, 322₁, 322₂ and 322₃), in the microphone output signal m(n), and attempt to remove them. Accordingly, the echo cancellation filtering output signal may comprise "filtered" frequency components 382₁, 382₂, 384₁, 384₂ and 384₃, which correspond to the frequency components in the echo signals (i.e., frequency components of the received input signal r(n) and the nonlinearities based frequency components), but at a much lower amplitude.

The frequency chart 390 depicts example frequency components of an output signal after echo suppression (e.g., the output signal o(n) 251 of the echo suppression block 250), following the echo cancellation filtering in this case. Here, the echo suppression may further reduce the filtered components 382₁, 382₂, 384₁, 384₂ and 384₃, leaving only the frequency components of the user input signal i(n) (i.e., the frequency components 332₁, 332₂ and 332₃). Thus, providing the sensor signal s(n) as a reference signal, which includes the nonlinear echo signal components, in addition to the original speaker signal r(n), may result in the ability to suppress all echo components (i.e., original and nonlinear based) but not the user input signal components. Hence, because all echo signal components, after the echo cancellation filtering, are at a reduced level, the echo suppression may be simplified, and user input may be (presumably) more faithfully reproduced at the output with little or no distortion.

Accordingly, the use of the vibration sensor (to obtain sensor signal s(n), which provides information regarding echo signal nonlinear components) may result in improved performance in comparison to the scenario depicted in Fig. 3B (i.e., without use of a vibration sensor, and thus without using the sensor signal as a reference as well). In other words, use of vibration sensor (and sensor signal generated thereby) may result in superior performance as the nonlinear echo terms may be represented in the output of the vibration sensor, and can therefore be identified and easily removed during echo cancellation. Furthermore, because the nonlinear echo terms can be more readily removed during echo cancellation there may be a reduced need for extensive processing during echo suppression

(and/or the need to use special techniques, as described in Fig. 3B, to solve for the nonlinear echo effects) resulting in a simpler overall echo cancellation.

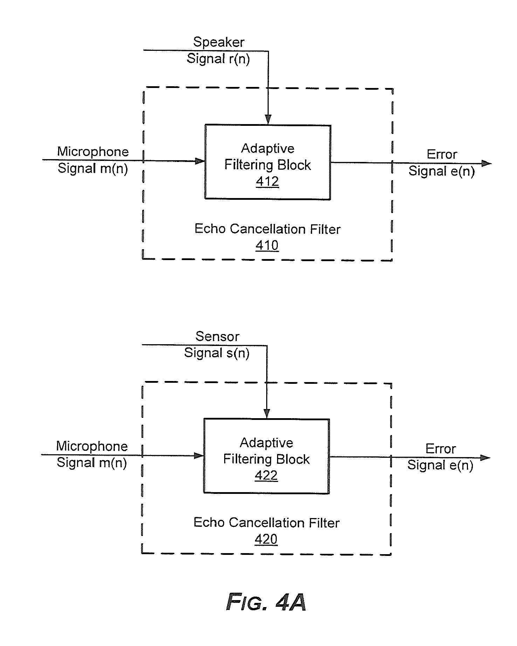

Figs. 4A-4D illustrate different example implementations of an echo cancellation filter that may be used to provide acoustic echo cancellation in an audio system. Referring to Figs. 4A-4D, there are shown different echo cancellation filters 410, 420, 430, 440, 450, and 460, each of which may correspond to the echo cancellation filter 240 of Fig. 2. In other words, each of the echo cancellation filters 410, 420, 430, 440, 450, and 460 may correspond to a possible example implementation of the echo cancellation filter 240 of Fig. 2.

Each of the echo cancellation filters 410, 420, 430, 440, 450, and 460 may comprise suitable circuitry for performing echo cancellation filtering, such as within audio input path in which input from an audio input device (e.g., a microphone, such as the microphone 230 of system 200 in Fig. 2) is processed. In this regard, as described with respect to Fig. 2, the echo cancellation filter 240 may utilize one or more input reference signals, which may be used in filtering echo related components in the input signal-that is the microphone output signal m(n). For example, the input reference signals may comprise the original speaker feed-i.e., the speaker signal r(n) 211, and/or the sensor signal s(n) provided by the vibration sensor output s(n) 261. Further, a feedback signal (i.e. the output signal of the filter, the error signal e(n) 241) may also be used, to further optimize the filtering performed.

In various implementations, the echo cancellation filters may be configured to function in accordance with adaptive filtering. In this regard, adaptive echo cancellation filtering may be based on estimating the linear and nonlinear echo signal components, due to the direct echo signal and reflections thereof, in order to effectively identify and filter out the echo signal (e.g., the echo signal x(n) 223) while leaving the wanted signal (e.g., user input signal i(n) 231). Accordingly, in various implementations of the echo cancellation filter, such as the implementations corresponding to echo cancellation filters 410, 420, 430, 440, 450, and 460, the echo cancellation filter may comprise one or more linear adaptive transversal filtering blocks, each of which may model the linear response between a reference signal (e.g., the speaker signal r(n), the sensor signal s(n), or a combination thereof) and an input signal (e.g., microphone signal m(n), particularly the portions thereof corresponding to the echo signal, x(n)), and may generate a residual error signal (e.g., the error signal e(n)), as the output.

In some instances, the adaptive filtering may be done using only a reference input-e.g., the vibration sensor output (i.e., the sensor signal s(n) 261) or the original signal (i.e., the speaker signal r(n) 211). For example, each of the echo cancellation filters 410 are 420, as shown in Fig. 4A, may be configured to apply a generic adaptive filtering scheme, based on a single reference signal, e.g., via a single adaptive filtering block. The echo cancellation filter 410 may comprise, for example, a single adaptive filtering block 412, which may apply echo filtering to the microphone output signal m(n) based on (only) the speaker signal r(n)-i.e., only the receive signal (the speaker input) is applied as a reference signal, when attempting to filter out components of the microphone output signal m(n) that presumably are unwanted (e.g., component of the echo signal). The output of the adaptive filtering block 412 (and thus the echo cancellation filter 410) is the error signal e(n).

Similarly, the echo cancellation filter 420 may comprise a single adaptive filtering block 422, which may be substantially similar to the adaptive filtering block 412, and which may apply echo filtering to the microphone output signal m(n) based on (only) the sensor signal s(n)-i.e., only the output of the vibration sensor is applied as a reference signal, when attempting to filter out components of the microphone output signal m(n) that presumably are unwanted (e.g., component of the echo signal). The output of the adaptive filtering block 422 (and thus the echo cancellation filter 420) is similarly the error signal e(n).

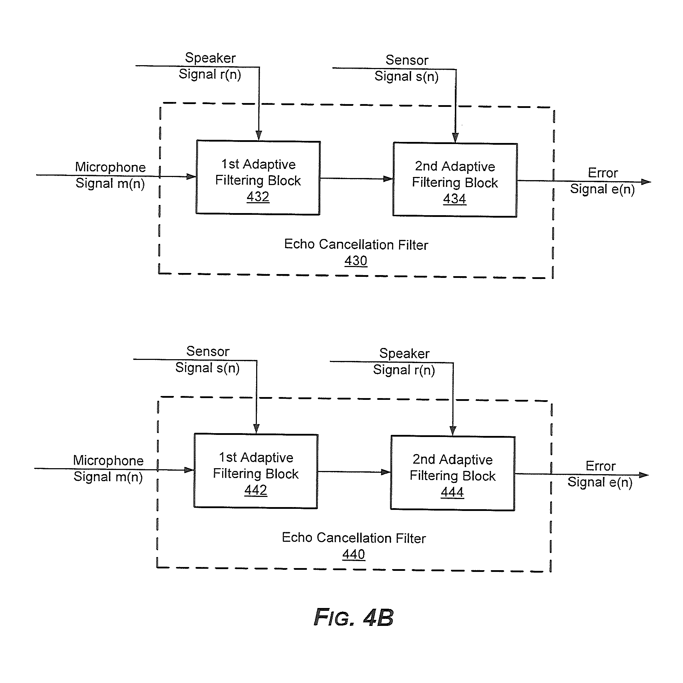

In other implementations, however, the echo cancellation filters may be configured to apply adaptive filtering may be based on both references-e.g., based on both of the vibration sensor output (i.e., the sensor signal s(n) 261) and the original signal (i.e., the speaker signal r(n) 211). For example, each of the echo cancellation filters 430 are 440, as shown in Fig. 4B, may be configured to apply adaptive filtering based on both of the speaker signal r(n) and the sensor signal s(n), such as by using two adaptive filtering blocks, that are arranged to apply the adaptive filtering in two stages, with each stage being based on one of the two reference inputs.

The echo cancellation filter 430 may comprise adaptive filtering blocks 432 and 434, each of which being substantially similar to the adaptive filtering block 412, corresponding to first and second filtering stages, respectively. The microphone output signal m(n) may be applied as the input to the adaptive filtering block 432 (i.e., the first stage), with the speaker signal r(n) being applied as the reference to the first stage. Thus, the first stage filtering may enable filtering out the unwanted portions corresponding to the speaker input (i.e., the speaker signal r(n)), without affecting wanted user speech signal i(n). The output of the adaptive filtering block 432 (the first stage) is then applied to the adaptive filtering block 434 (i.e., second stage), with the sensor signal s(n) being applied as the reference to this second stage. Thus, the second stage may enable filtering the nonlinear unwanted signals (i.e., nonlinear components of the echo signal). The output from the second adaptive filter stage is the overall filter output-that is the error signal e(n). By deploying the echo cancellation filtering across two adaptive filter stages, the filtering of the linear and nonlinear echo signals may be enhanced.

Similarly, the echo cancellation filter 440 may comprise adaptive filtering blocks 442 and 444, each of which being substantially similar to the adaptive filtering block 412, corresponding (also) to first and second filtering stages, respectively. However, in the echo cancellation filter 440, the reference applied in the first stage (i.e., the adaptive filtering blocks 442) is the sensor signal s(n) whereas the reference applied in the second stage (i.e., the adaptive filtering blocks 444) is the speaker signal r(n). Nonetheless, the overall filtering is substantially similar-i.e., one stage (the first stage in this case) filters out the nonlinear components whereas another stage (the second stage in this case) filters out the linear components.

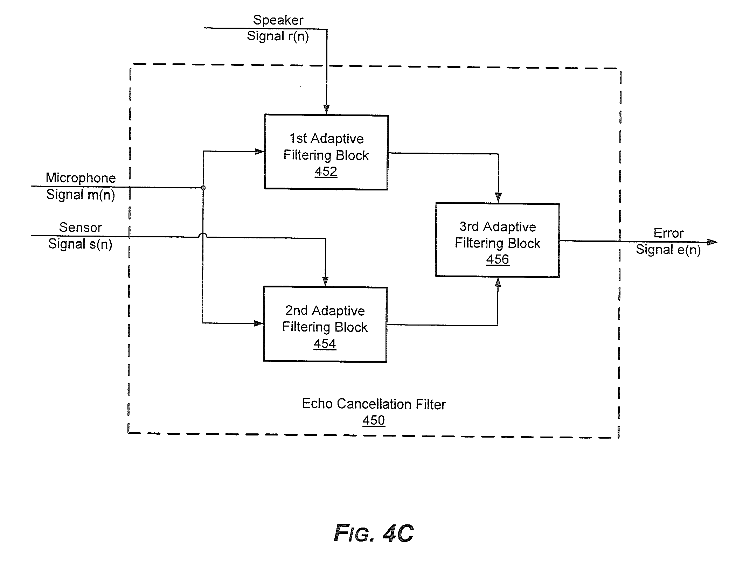

The echo cancellation filter 450, as shown in Fig. 4C, may also be configured to provide multi-stage adaptive filtering based on both of the speaker signal r(n) and the sensor signal s(n). The echo cancellation filter 450 may be configured, however, to perform echo cancellation filtering using three stages of adaptive filtering. In this regard, the echo cancellation filter 450 may comprise adaptive filtering blocks 452, 454, and 456, each of which being substantially similar to the adaptive filtering block 412. The first two filtering blocks (the adaptive filtering blocks 452 and 454) may be arranged to apply first and second stages of filtering in parallel. In this regard, the microphone output signal m(n) may be applied as input to both adaptive filtering blocks 452 and 454. Further, the first (stage) adaptive filtering block 452 may receive and apply the speaker signal r(n) as a reference; whereas the second (stage) adaptive filtering block 454 may receive and apply the sensor signal s(n) as a reference.

The outputs from each of the adaptive filtering blocks 452 and 454 may then be used as inputs to the third (stage) adaptive filter filtering block 456, which may be substantially similar to the adaptive filtering block 412, and which outputs the overall output signal of the echo cancellation filter 450 (i.e., the error signal e(n)). Thus, to provide the echo cancellation filtering, the first (stage) adaptive filtering block 452 may filter out the unwanted linear echo components (i.e., components corresponding to the original audio output, the second (stage) adaptive filtering block 454 may filter out the nonlinear echo components, and both filtered outputs (comprising mainly the wanted components) may then be further filtered in a third (stage) adaptive filtering block 456 with the result being that the output error signal e(n) is very accurate.

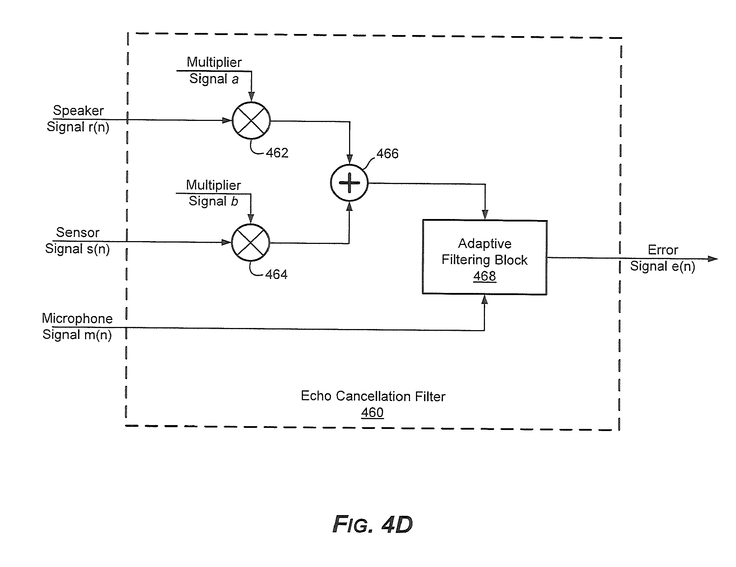

The echo cancellation filter 460, as shown in Fig. 4D, depicts another configuration that may apply adaptive filtering scheme based on both of the speaker signal r(n) and the sensor signal s(n) using a single adaptive filtering stage. The echo cancellation filter 460 may comprise multipliers 462 and 464, adder 466, and an adaptive filtering block 468. In the filtering scheme implemented in the echo cancellation filter 460, the reference inputs, the speaker signal r(n) and the sensor signals, are summed in various proportions to each other before being applied as a combined reference signal to the adaptive filtering stage (i.e., to the adaptive filtering block 468). For example, the input speaker signal r(n) may be applied to the multiplier 462, which multiplies the receiver signal r(n) by a multiplier signal *a*. Similarly, the sensor signal s(n) may be applied to the multiplier 464, which multiplies the sensor signal s(n) by a multiplier signal b. In this regard, the multiplier signals *a* and *b* may be adjustable-e.g., being adjusted based on desired combining of the references inputs.

The outputs from the multipliers 462 and 464 are then applied to the adder 466, which sums the outputs of the two multipliers. Thus, the output for the adder 466 consists of both the receiver signals r(n) and the sensor signal s(n), summed in various proportions to each other (as defined by the multiplier signals *a* and b). In other words, adjusting the multiplier signals *a* and b enables adjusting the effective contributions of each of the two references signals, such as according to prevailing conditions. For example, if a host system incorporating the echo cancellation filter 460 is being used in a hands-free mode, then the proportion of the output from sensor signal s(n) in the summed signal (i.e., the output from the adder 466) can be made to be more dominant. Conversely, if the host system is being used close to the user's head or ear then it could be that the input speaker signal r(n) is made to contribute more to the output of the adder 466.

The adaptive filtering block 468 may then apply adaptive filtering to the microphone signal m(n), by using the combined reference input from the adder 466 to filter out the unwanted linear and nonlinear echo components, without affecting the wanted component in the input signal (i.e., the user input).

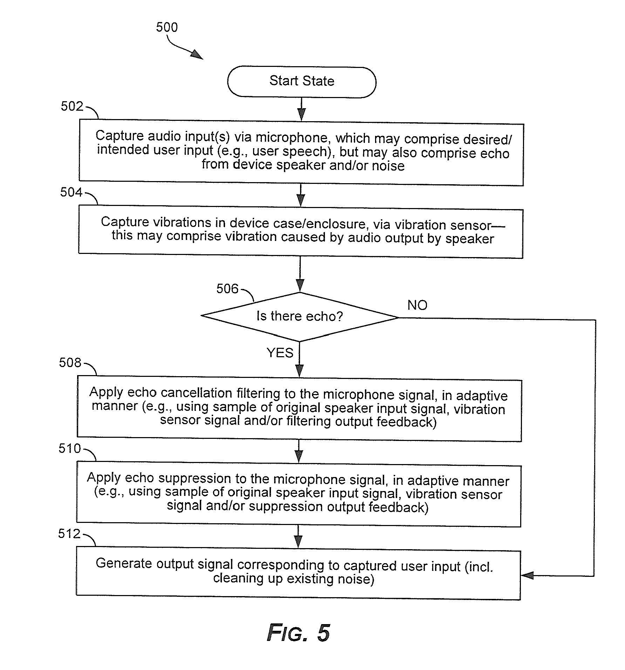

Fig. 5 is a flowchart illustrating an example processing for providing acoustic echo cancellation based on vibration feedback. Referring to Fig. 5, there is shown a flow chart 500, comprising a plurality of example steps, which may be executed in a system (e.g., the system 200 of Fig. 2) to provide acoustic echo cancellation, such as based on input from vibration sensors.

In step 502, after a starting step (where the system is, e.g., powered on), audio input may be captured via microphone. The captured audio input may comprise desired/ intended user input (e.g., user speech), but may also comprise other unwanted content, such as ambient noise and/or echo corresponding to speaker audio output (in the same device). In step 504, vibrations in device case/enclosure may be captured, such as via a vibration sensor. The captured vibration may comprise vibrations caused by audio output by speaker.

In step 506, it may be determined whether there is echo in the captured audio input. In instances where there is no echo, the process may jump to step 512, otherwise (i.e., there is echo), the process may proceed to step 508. In some implementations, however, echo cancellation and suppression may always be done, and as such step 506 may be deleted from the process, and steps 508 and 512 are always performed. The may be the case because it may be assumed that the signal processing performed in accordance with the present disclosure would result in correct echo reduction-e.g., there would always be some measure of echo in any captured input, and the only issue is how much echo is there; and even if there is no echo, the signal processing would accommodate that -e.g., there would be no echo based adjustments (filtering and/or suppression), as there would be no echo related measurements.

In step 508, echo cancellation filtering may be applied to the microphone signal, in adaptive manner (e.g., using a sample of original speaker input signal, vibration sensor signal and/or filtering output feedback). In step 510, echo suppression may be applied to the microphone signal, in an adaptive manner (e.g., using a sample of original speaker input signal, vibration sensor signal and/or suppression output feedback).

In step 512, an output signal, corresponding to a captured user input, may be generated. In this regard, the output signal presumably may comprise no unwanted echo signals (or components thereof). Further, in some instances, the generation of the output signal may comprise cleaning up any existing ambient noise.

Other implementations may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for non-intrusive noise cancelation.

Accordingly, the present method and/or system may be realized in hardware, software, or a combination of hardware and software. The present method and/or system may be realized in a centralized fashion in at least one computer system, or in a distributed fashion where different elements are spread across several interconnected computer systems. Any kind of computer system or other system adapted for carrying out the methods described herein is suited. A typical combination of hardware and software may be a general-purpose computer system with a computer program that, when being loaded and executed, controls the computer system such that it carries out the methods described herein. Another typical implementation may comprise an application specific integrated circuit or chip.

The present method and/or system may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form. Accordingly, some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

## Claims

1. A system for use in an electronic device having an acoustic input element and an acoustic output element, the system comprising:
one or more circuits, the one or more circuits being operable to:
apply echo cancellation filtering to an acoustic input obtained via the acoustic input element, wherein:
the echo cancellation filtering comprises identifying and/or filtering out echo components in the acoustic input,
the echo components correspond to an echo signal caused by an acoustic output via the acoustic output element,
the echo components in the acoustic input comprise linear and nonlinear components, and
the echo cancellation filtering identifies and/or filters out linear and nonlinear echo components; and
apply echo suppression to the acoustic input, wherein the echo suppression comprises suppressing residual echo in the acoustic input.

2. The system of claim 1, wherein at least some of the nonlinear echo components are introduced during generating of the acoustic output via the acoustic output element.

3. The system of claim 1, wherein the one or more circuits are operable to apply the echo cancellation filtering based on one or more reference signals.

4. The system of claim 3, wherein the one or more reference signals comprise:
an original input signal that is fed into the acoustic output element to effectuate generating the acoustic output,
a sensor signal configurable to identify nonlinear echo components, and/or
a feedback signal corresponding to an output of the echo cancellation filtering.

5. The system of claim 1, wherein the electronic device comprises a vibration sensor that is operable to generate a sensor signal corresponding to detected vibrations in the electronic device due to outputting the acoustic output via the acoustic output element.

6. The system of claim 1, wherein the one or more circuits are operable to apply the echo suppression based on output of the echo cancellation filtering.

7. The system of claim 1, wherein the one or more circuits are operable to apply the echo suppression based on one or more reference signals.

8. The system of claim 7, wherein the one or more reference signals comprise:
an original input signal that is fed into the acoustic output element to effectuate generating the acoustic output,
a sensor signal configurable to identify nonlinear echo components, and/or
a feedback signal corresponding to an output of the echo suppression.

9. A method, comprising:
in an electronic device, comprising an acoustic input element, and an acoustic output element:
obtaining an acoustic input via the acoustic input element;
applying echo cancellation filtering to the acoustic input, wherein:
the echo cancellation filtering comprises identifying and/or filtering out echo components in the acoustic input,
the echo components correspond to an echo signal caused by an acoustic output via the acoustic output element,
the echo components in the acoustic input comprise linear and nonlinear components, and
the echo cancellation filtering identifies and/or filters out linear and nonlinear echo components; and
applying echo suppression to the acoustic input, wherein the echo suppression comprises suppressing residual echo in the acoustic input.

10. The method of claim 9, wherein at least some of the nonlinear echo components are introduced during generating the acoustic output via the acoustic output element.

11. The method of claim 9, comprising applying the echo cancellation filtering based on one or more reference signals.

12. The method of claim 11, wherein the one or more reference signals comprise:
an original input signal that is fed into the acoustic output element to effectuate generating the acoustic output,
a sensor signal configurable to identify nonlinear echo components, and/or
a feedback signal corresponding to an output of the echo cancellation filtering.

13. The method of claim 9, comprising generating a sensor signal corresponding to detected vibrations in the electronic device due to outputting the acoustic output via the acoustic output element.

14. The method of claim 9, comprising applying the echo suppression based on output of the echo cancellation filtering.

15. The method of claim 9, comprising applying the echo suppression based on based on one or more reference signals.
